(19) Europäisches Patentamt
European Patent Office
Office européen des brevets

(11) Numéro de publication: **0 015 801**
**B2**

(12) **NOUVEAU FASCICULE DE BREVET EUROPEEN**

(45) Date de publication du nouveau fascicule du brevet: **30.03.88**

(51) Int. Cl.⁴: **C 01 F 7/02**, C 01 F 7/14, B 01 J 35/10

(21) Numéro de dépôt: **80400227.7**

(22) Date de dépôt: **18.02.80**

(54) **Procédé de fabrication de billes d'alumine à double porosité.**

(30) Priorité: **26.02.79 FR 7904810**

(43) Date de publication de la demande: **17.09.80 Bulletin 80/19**

(45) Mention de la délivrance du brevet: **13.07.83 Bulletin 83/28**

(45) Mention de la décision concernant l'opposition: **30.03.88 Bulletin 88/13**

(84) Etats contractants désignés: **BE CH DE FR GB IT NL**

(56) Documents cités:
**DE - A - 2 812 875**
**DE - B - 1 032 728**
**FR - A - 2 179 967**
**FR - A - 2 185 444**
**FR - A - 2 215 389**
**FR - A - 2 245 408**
**US - A - 2 492 167**
**US - A - 4 140 773**

**"Catalyst development for coal liquefaction" EPRI AF-574 pages 194-198, Nov. 1977**

**Le dossier contient des informations techniques présentées postérieurement au dépôt de la demande et ne figurant pas dans le présent fascicule.**

(73) Titulaire: **RHONE-POULENC CHIMIE, 25, quai Paul Doumer, F-92408 Courbevoie Cédex (FR)**

(72) Inventeur: **Bouge, Gilbert, 11bis, avenue Jalabert, F-30340 Salindres (FR)**
Inventeur: **Jacques, Roland, 579, Montée de Silhol, F-30100 Ales (FR)**
Inventeur: **Poisson, Régis, 3, allée des Acacias, F-92310 Sevres (FR)**
Inventeur: **Seigneurin, Laurent, 3, avenue du Parc, F-30340 Salindres (FR)**

(74) Mandataire: **Esson, Jean-Pierre et al, Rhône-Poulenc Interservices Service Brevets Chimie 25, quai Paul Doumer, F-92408 Courbevoie Cedex (FR)**



ACTORUM AG

**Description**

La présente invention concerne un procédé de préparation de billes d'alumine à double porosité utilisables comme supports de catalyseurs.

Des billes d'alumine à double porosité ont été décrites dans la publication «Catalyst development for coal liquefaction» epri AF-574 Research Project 408-1 pages 194–198.

Il est connu d'après le brevet français no 1 503 495 de préparer des particules sphéroïdales d'alumine par mise en forme selon la technique dite de «dégouttage dans l'huile» ou de «coagulation en goutte», puis mûrissement, séchage et calcination d'un mélange comportant, en particulier, un sol de boehmite et d'alumine amorphe, une alumine calcinée (sous la forme gamma) et un agent porogène (amidon et/ou noir de carbone).

Ce procédé présente de nombreux inconvénients: le sol de boehmite et d'alumine amorphe est préparé à partir d'aluminium métallique par une technique très complexe et coûteuse; de plus, l'obtention de produits légers nécessite la mise en œuvre d'agents porogènes; enfin, selon ce procédé, il est absolument nécessaire d'opérer un mûrissement (ou vieillissement) dans l'ammoniaque des particules sphéroïdales après leur mise en forme pour obtenir des produits solides.

On connaît par ailleurs d'après le brevet français no 2 185 444 un procédé de préparation d'éléments en alumine poreux, obtenus de préférence par extrusion, présentant une certaine macroporosité. Selon ce procédé, dans une première étape, de la boehmite microcristalline ou de la pseudo-boehmite est mélangée avec un acide fortement dilué et des particules d'alumine (tel que la boehmite traitée thermiquement à 400°C) en proportions telles que les particules d'alumine représentent 10 à 85% du mélange solide (voir page 3, lignes 37–39), puis le mélange est mis en forme, les éléments obtenus étant ensuite séchés et calcinés à une température comprise entre 250° et 1200°C. De plus, selon le FR-A 2 245 048 les particules d'alumine sont constituées d'alumine gamma.

Ce procédé ne permet pas d'obtenir des particules sphéroïdales d'alumine, présentant une double porosité sans incorporation d'agent porogène et ayant des micropores et des macropores dont les diamètres varient dans de larges limites.

En outre, on connaît par le brevet US 4 140 773 un autre procédé de préparation de billes à double porosité par hydrolyse d'alkoxydes d'aluminium puis séchage et passage au drageoir du produit obtenu.

On connaît enfin par la demande de brevet DE-OS 2 812 875 un procédé de préparation de particules à double porosité sans agent porogène dans lequel on part d'un intermédiaire gel amorphe – boehmite et pseudo-boehmite, obtenu à partir d'un sulfate d'aluminium. L'intermédiaire est ensuite mise en forme par gélification. Ce procédé est toutefois limité par la nature même de l'intermédiaire et nécessite une étape de mûrissement.

La Demanderesse a trouvé un procédé de fabrication de billes d'alumine qui remédie aux inconvénients présentés par les techniques de l'art antérieur et qui permet notamment de préparer des produits légers, très solides, présentant une double porosité sans incorporation d'agent porogène et sans étape de mûrissement.

La présente invention concerne un procédé de fabrication de billes d'alumine à double porosité, du type dans lequel on forme un mélange à base de boehmite ou pseudoboehmite, on met sous forme sphéroïdale, on gélifie les gouttes du mélange et on récupère les billes gélifiées que l'on sèche et que l'on calcine à une température comprise entre 550 et 1100°C, caractérisé en ce que le mélange précité est obtenu de la manière suivante: on mélange à un pH inférieure à 7,5: d'une part, un sol de boehmite ultra-fine ou de pseudo-boehmite, le sol de boehmite étant exempt d'alumine amorphe, la concentration en poids du sol exprimée en $Al_2O_3$ étant comprise entre 5 et 25% et, d'autre part, dans une proportion comprise entre 30 et 95% en poids (rapporté aux solides totaux), des particules sphéroïdales d'alumine essentiellement sous forme d'au moins une des phases prise dans le groupe constitué par êta, gamma, delta, thêta; ces particules présentant un volume microporeux compris entre 0,4 et 1 $cm^3/g$, une surface spécifique comprise entre 100 et 350 $m^2/g$, le diamètre des particules étant compris entre 1 et 50 micromètres, au moins 50% des particules sphéroïdales ayant un diamètre $\varnothing$ compris autour d'une valeur moyenne $\varnothing_M$ tel que $\varnothing = \varnothing_M \pm 20\% \varnothing_M$.

Au sens de la présente invention, on entend par sol une suspension aqueuse qui ne décante pas.

Les boehmites ultra-fines mises en œuvre selon la présente invention peuvent être caractérisées par la diffraction X (dans tout ce qui suit les axes cristallographiques de référence sont ceux données par B.D. Lippens, thèse Delft 1961) et par microscopie électronique à haute résolution. Il est à noter que par leur structure parfaitement ordonnée, leurs dimensions de monocristaux et leur morphologie apparente, les boehmites ultra-fines sont parmi les produits cristallisés les plus fins connus.

Selon le procédé de la présente invention, les boehmites ultra-fines mises en œuvre sont constituées de monocristaux dont les morphologies dominantes détectées par les diagrammes Debye-Scherrer peuvent évoluer des formes fibrillaires aux formes lamellaires selon les procédés de fabrications employés.

Les diagrammes Debye-Scherrer des boehmites ultra-fines fibrillaires, suivis de microdensitométrages sur (002) montrent que le produit est une boehmite présentant des monocristaux développés essentiellement dans une seule direction cristallographique dont la forme peut évoluer des lattes longues et étroites (réflexions [020] et [125] très atténuées, [105] normalement intense) jusqu'aux lattes longues et très étroites (réflexions

[hkl] absentes, halo [012] et réflexion nette [200]). La direction d'allongement des monocristaux est celle des chaînes polymériques doubles imaginées pour la boehmite bien cristallisée et correspondrait à l'axe a. Suivant cette direction, les monocristaux ont des dimensions comprises entre 500 et 5000 Å (50 et 500 nm) (méthode de Warren et méthode B.E.T.) et suivant les deux autres directions cristallographiques, les dimensions sont comprises entre 10 et 100 Å (1 et 10 nm) (estimées d'après les résultats de la méthode B.E.T.).

Le diagramme de microdiffraction électronique des boehmites ultra-fines fibrillaires est caractéristique d'un produit souvent orienté par accolement des fibrilles en faisceaux (ou fibres).

Ces boehmites ultra-fines fibrillaires séchées à 110°C présentent des surfaces spécifiques comprises entre 50 et 600 $m^2/g$ (mesurées par la méthode B.E.T.).

Le diagramme Debye-Scherrer des boehmites ultra-fines lamellaires fait apparaître de nombreuses réflexions caractéristiques d'un faciès tabulaire présentant encore le clivage (002) correspondant aux plans d'oxydriles de la boehmite bien cristallisée sous forme de:
- plaquettes rhombiques (réflexions [002] et [105] partiellement éteintes, [008] totalement éteinte),
- plaquettes rhombiques allongées probablement suivant la direction (110) (doublet [020], [105] non résolu, réflexions [002] et [008] normalement intenses),
- lattes longues et élargies (réflexions [002] partiellement éteinte, [008] et [105] totalement éteintes).

Par ailleurs, la méthode de Warren appliquée à ces boehmites ultra-fines lamellaires montre que les cristallites présentent au moins deux dimensions de croissance, comprises entre 100 et 5000 Å (10 et 500 nm), l'épaisseur des cristallites constituant la troisième dimension étant plus faible et comprise entre 20 et 100 Å (2 et 10 nm). Leur surface spécifique après séchage à 110°C est comprise entre 100 et 300 $m^2/g$.

Le sol de boehmite ultra-fine mis en œuvre selon l'invention est exempt d'alumine amorphe.

Les sols de boehmite ultra-fine mis en œuvre selon le procédé de la présente invention peuvent notamment être préparés selon les procédés décrits dans les brevets français no 1 261 182 et 1 381 282.

Le brevet français no 1 261 182 décrit notamment un procédé de fabrication de boehmite ultra-fine par chauffage d'une dispersion aqueuse d'alumine en présence d'un radical d'acide monovalent, la dispersion aqueuse d'alumine ayant été obtenue à partir de chlorure basique d'aluminium, de nitrate basique d'aluminium, d'hydroxyde d'aluminium, de gel d'alumine ou de solutions colloïdales d'alumine. Ce produit commercialisé par la Société Du Pont de Nemours sous la marque Baymal, représente une boehmite ultrafine fibrillaire dont la surface spécifique est comprise entre 250 et 350 $m^2/g$.

Le brevet français no 1 381 282, décrit notamment un procédé de fabrication de boehmite ultra-fine consistant à faire évoluer à une température comprise entre 60 et 150°C une suspension ou un gâteau de gel d'alumine hydratée amorphe contenant jusqu'à 35% en poids d'alumine comptée en $Al_2O_3$, et par rapport à cette alumine comptée en molécules d'$Al_2O_3$, une quantité d'ions acides monovalents variant de 0,05 à 0,5, pendant un temps de 15 heures à 10 jours; le gâteau ayant été obtenu par essorage, lavage et filtration de gel d'alumine précipité en continu à un pH compris entre 8 et 9 à partir d'une solution d'aluminate de soude et d'acide nitrique. La surface spécifique de ces produits varie entre 200 et 600 $m^2/g$. Les boehmites ultra-fines obtenues par ce procédé sont généralement exemptes de toute forme lamellaire et ont donc les caractéristiques cristallographiques données ci-dessus pour les boehmites ultra-fines fibrillaires, constituées de monocristaux sous forme de lattes longues et très étroites.

Selon un mode de mise en œuvre préféré du procédé de l'invention, on utilisera de telles boehmites ultra-fines fibrillaires.

La pseudo-boehmite mise en œuvre selon le procédé de l'invention représente notamment le constituant essentiel des suspensions d'alumine obtenues par précipitation acide d'une solution d'aluminate alcalin ou par neutralisation basique des sels d'alumine. Elle se présente à l'état humide sous forme de flocons gonflés d'eau, et instables. Leur vieillissement s'accompagne d'une diminution du gonflement avec expulsion d'eau (synérèse).

Les données de diffraction X, de microdiffraction et de microscopie électronique ainsi que de spectrographie infrarouge semblent indiquer qu'au sein de ces flocons ne seraient développés au cours de la floculation que des microdomaines, pseudo-cristallisés, très imparfaits, fortement solvatés et reliés entre eux par des forces intermoléculaires telles que le gonflement du gel est toujours limité. L'étendue, l'orientation, le degré de solvatation et l'ordre cristallin de ces microdomaines sont variables suivant les conditions de précipitation, conduisant ainsi à divers produits présentant un même type de microstructure lâche et imparfaite, rappelant celle de la boehmite et distinguées, à l'aide de la diffraction X, comme pseudo-boehmite b, a ou recristallisée.

La pseudo-boehmite b désigne la structure la moins évoluée. Dans ce cas, les microdomaines pseudo-cristallisés sont fortement perturbés par l'insertion d'impuretés toujours présentes et spécialement, par référence à la boehmite, dans la direction c, perpendiculairement à la direction a d'allongement des molécules polymériques (absence du halo [0,02] et très faible intensité de tous les halos présents).

La pseudo-boehmite a ou normale, plus pure présente un état de cristallisation des microdomaines plus avancé que dans la forme b, et manifeste un ordre à très courte distance dans les 3 directions cristallographiques de référence (halo

[002] assez intense situé entre 6,40 et 6,80 Å présent avec la série des halos en position des réflexions de la boehmite).

La pseudo-boehmite recristallisée, encore appelée «produit intermédiaire entre boehmite et gel de boehmite» (B.C. Lippens, thèse Delft. 1961) se distingue des pseudo-boehmites b et a, par les particularités suivantes:

- valeur d'interférence (002) comprise entre 6,25 et 6,40 Å (valeurs corrigées),
- amenuisement notable du halo (002) sous forme de bande,
- intensités fortement renforcées à l'endroit de la bande (002) et des halos (012), (014), (103) et (020) (105).

La concentration en poids d'alumine du sol exprimée en $Al_2O_3$ est comprise entre 5 et 25% et, de préférence, entre 10 et 15%. Elle peut toutefois varier en dehors de ces limites si de façon connue, on ajuste la viscosité du mélange entre le sol et les particules sphéroïdales d'alumine avant l'étape de mise en forme.

Selon le procédé faisant l'objet de l'invention, on ajoute au sol de boehmite ultra-fine ou de pseudo-boehmite dans une proportion comprise entre 30 et 95% en poids, et, de préférence, 65 à 90% en poids, (rapporté aux solides totaux) des particules sphéroïdales d'alumine essentiellement sous forme d'au moins une des phases prise dans le groupe constitué par êta, gamma, delta, thêta; ces particules présentant un volume microporeux compris entre 0,4 et 1 $cm^3/g$. Si l'on désire des produits légers présentant un grand volume microporeux, on préfère mettre en œuvre, selon le procédé de l'invention, des particules sphéroïdales ayant un volume microporeux compris entre 0,7 et 1 $cm^3/g$.

Ce mélange est effectué à un pH inférieur à 7,5 et, de préférence, compris entre 3 et 7, et plus particulièrement entre 4 et 7.

Le diamètre des particules sphéroïdales d'alumine mises en œuvre doit être compris entre 1 et 50 µm, et, de préférence entre 5 et 10 µm. Les limites préférentielles s'appliquent à la majorité des particules sphéroïdales mises en œuvre et, de préférence, à plus de 90% de celles-ci.

Sans limiter la présente invention à la théorie, il semble que pour un diamètre de particules donné, on atteint le diamètre de macropores maximal et le volume de macropores maximal dans la bille finale quand la distribution granulométrique des particules a le resserrement maximal; la bille présente alors la solidité maximum pour ces valeurs de diamètre de macropores et de volume de macropores. Ainsi, selon le procédé de l'invention, le diamètre $\varnothing$ des particules sphéroïdales est tel qu'au moins 50% et, de préférence, 70% de celles-ci ont un diamètre $\varnothing$ compris autour d'une valeur moyenne $\varnothing_M$ tel que $\varnothing = \varnothing_M \pm 20\% \varnothing_M$. Les particules mises en œuvre peuvent avoir été broyées ou non.

Par ailleurs, la forme des particules doit être sensiblement sphérique ou sphéroïdale, les produits finis présentant de ce fait une solidité accrue.

Des particules sphéroïdales d'alumine possédant les caractéristiques décrites ci-dessus peuvent notamment être préparées selon l'un des procédés suivants (les valeurs des pH données ci-après ont été mesurées à 25°C).

On précipite une solution aqueuse d'un sel d'aluminium par une solution d'un aluminate alcalin, on atomise le précipité obtenu puis on le remet en suspension dans une solution aqueuse ayant un pH compris entre 4,5 et 7, on atomise et on sèche la bouillie d'alumine obtenue puis on lave, sèche et calcine le produit. (Procédé décrit dans le brevet US 3 520 654.)

Les particules sphéroïdales d'alumine mises en œuvre selon le procédé de l'invention peuvent également être obtenues par précipitations d'un gel d'alumine à un pH compris entre 7,5 et 11, lavage, essorage, remise en suspension, déshydratation rapide du produit dans un courant de gaz chauds à une température d'entrée comprise entre 350 et 1000°C puis calcination. (Procédé décrit dans le brevet FR 2 221 405.)

Les particules sphéroïdales d'alumine mises en œuvre selon le procédé de l'invention peuvent également être obtenue par précipitation d'un gel d'alumine à un pH compris entre 7 et 10,5, mûrissement du précipité à un pH compris entre 10 et 11, homogénéisation et atomisation à 250–550°C de la bouillie obtenue puis calcination. (Procédé décrit dans le brevet GB 888 772.)

Les particules sphéroïdales d'alumine mises en œuvre selon le procédé de l'invention peuvent également être obtenues par précipitation d'un aluminate alcalin par un acide minéral à une température comprise entre 30 et 75°C, mûrissement dans un second réacteur à 35–70°C à un pH voisin de 7, recyclage de la bouillie obtenue dans le réacteur de mélange, filtration, lavage, séchage du produit par atomisation puis calcination. (Procédé décrit dans le brevet US 3 630 670.)

D'une manière générale, les particules sphéroïdales d'alumine peuvent être préparées par déshydratation rapide dans un courant de gaz chauds de suspensions aqueuses de boehmite ultra-fine, de pseudo-boehmite et/ou d'alumine amorphe puis calcination. Toutefois, ce traitement ne conduit pas toujours après séchage et calcination à des particules possédant la microporosité désirée, selon le procédé de l'invention. Pour remédier à ce problème, les particules sphéroïdales d'alumine mises en œuvre selon le procédé de l'invention peuvent également être obtenues par traitement par une base décomposable en produits volatils de dispersions aqueuses de boehmite ultra-fine, de pseudo-boehmite et/ou d'alumine amorphe afin de leur conférer la microporosité désirée. Le traitement de la dispersion est effectué avant les étapes de séchage et calcination de façon à amener le pH du milieu de traitement à une valeur voisine de 9 et, de préférence, comprise entre 8 et 9,5. Les bases décomposables en produits volatils que l'on peut mettre en œuvre sont notamment l'ammoniaque, le carbonate d'ammonium et les amines; l'expression décomposable en produits volatils signifie que

ces bases sont éliminées du produit traité lors des opérations subséquentes de séchage et calcination.

Selon un mode de mise en œuvre préféré de l'invention on utilisera des particules sphéroïdales d'alumine préparées selon le procédé suivant: on prépare une suspension aqueuse d'alumine au moins partiellement sous forme de boehmite ultra-fine par traitement d'une poudre d'alumine active présentant une structure mal cristallisée et/ou amorphe dans un milieu aqueux ayant un pH inférieur à 9, on effectue éventuellement le traitement de la suspension par une base décomposable en produits volatils tel que décrit ci-dessus, on sèche la suspension de préférence par atomisation de façon à pouvoir régler la granulométrie du produit, puis on calcine le produit obtenu à une température comprise entre 550 et 1100°C.

La poudre d'alumine active mise en œuvre dans ce mode de mise en œuvre préféré du procédé de l'invention est, de préférence, obtenue par déshydratation rapide d'hydroxydes ou d'oxyhydroxydes d'aluminium, et, plus particulièrement, d'hydrargillite dans un courant de gaz chauds; cette déshydratation peut être opérée dans n'importe quel appareillage approprié à l'aide d'un courant de gaz chauds, la température d'entrée des gaz dans l'appareillage variant généralement de 400 à 1200°C le temps de contact de l'hydroxyde ou de l'oxyhydroxyde avec les gaz chauds étant compris entre une fraction de seconde et 4–5 secondes; un tel procédé de préparation de poudre d'alumine active a notamment été décrit dans le brevet français no 1 108 011.

On entend par alumine de structure mal cristallisée, une alumine telle que l'analyse aux rayons X donne un diagramme ne présentant qu'une ou quelques raies diffuses correspondant aux phases cristallines des alumines de transition basse température, c'est-à-dire essentiellement des phases chi, rho, êta, gamma.

On entend par alumine de structure amorphe, une alumine telle que l'analyse aux rayons X ne décelle aucune raie caractéristique d'une phase cristalline quelconque.

La surface spécifique de l'alumine active mise en œuvre varie généralement entre 200 et 400 $m^2/g$, le diamètre des particules est généralement compris entre 0,1 et 300 µm et, de préférence, entre 1 et 120 µm, la perte au feu d'une telle alumine mesurée par calcination à 1000°C varie généralement entre 3 et 15%, ce qui correspond à un rapport molaire $H_2O/Al_2O_3$ compris entre 0,17 et 0,85.

Cette alumine peut être mise en œuvre telle quelle ou avoir été traitée de façon à ce que sa teneur en soude exprimée en $Na_2O$ soit inférieur à 1000 ppm. (parties par million).

Cette alumine peut avoir été broyée ou non; il peut être avantageux de mettre en œuvre de la poudre d'alumine active constituée de particules ayant un diamètre compris entre 1 et 20 µm.

Le traitement de la poudre d'alumine active peut s'opérer en phase vapeur ou en phase liquide. On opère, de préférence, en phase liquide.

Par ailleurs, le traitement est conduit sous agitation.

Le milieu aqueux utilisé peut être constitué par l'eau et/ou par tout acide et/ou sel qui se dissocie dans l'eau, en libérant un anion, pour donner une solution ayant un pH inférieur à 9, l'anion étant de préférence un anion monovalent.

Les acides mis en œuvre peuvent être des acides forts ou des acides faibles, solubles dans l'eau. Ils peuvent être minéraux ou organiques; parmi les acides organiques, les acides monocarboxyliques, dicarboxyliques et halogénés, solubles dans l'eau conviennent. Les acides que l'on peut mettre en œuvre sont notamment: l'acide chlorhydrique, l'acide nitrique, l'acide perchlorique, l'acide sulfurique, l'acide iodique, l'acide bromhydrique, les acides formiques, acétique, propanoïque, butanoïque, oxalique, maléïque, succinique, glutarique, les acides chloro et bromoacétiques.

Parmi les sels que l'on peut mettre en œuvre, on peut citer ceux comportant les anions nitrate, chlorure, formiate, acétate, oxalate, et plus particulièrement les nitrates d'ammonium, de sodium et d'aluminium, l'acétate d'ammonium, le chlorure d'ammonium, le formiate d'ammonium.

La concentration en alumine dans le milieu aqueux exprimée en $Al_2O_3$ est inférieur à 50% en poids et, de préférence, comprise entre 2 et 20%.

Le rapport des concentrations molaires entre l'anion et l'alumine peut varier dans de larges limites; un rapport inférieur à 6, est toutefois préféré.

La température de traitement de la poudre d'alumine active est supérieure à 80°C et, de préférence, comprise entre 120 et 225°C et, plus particulièrement, entre 130 et 180°C. Le traitement est effectué, de préférence, à reflux ou dans un autoclave pour éviter les départs de réactifs et d'eau. Dans ces conditions, la pression est supérieure à la pression atmosphérique et comprise entre 1 et 25 bars, et, plus particulièrement entre 2,5 et 10 bars.

Le temps de réaction doit être suffisant pour que se développe la boehmite ultra-fine recherchée dans les conditions de milieu et de température données. Dans les conditions préférées, ce temps varie généralement entre 2 et 72 heures et, plus particulièrement entre 6 et 24 heures. Il peut être noté que ce temps peut être raccourci quand la température augmente. La température et le temps de réaction influent notamment sur le taux de boehmite ultra-fine obtenu.

On obtient ainsi une suspension aqueuse d'alumine au moins partiellement sous forme de boehmite ultra-fine.

La partie cristallisée de cette alumine peut être caractérisée par la diffraction X et par la microscopie électronique à haute résolution comme étant la boehmite ultra-fine, dont les différentes caractéristiques ont été décrites ci-dessus.

Selon les conditions mises en œuvre, les boehmites ultra-fines obtenues sont constituées de

monocristaux dont les morphologies dominantes détectées par les diagrammes Debye-Scherrer, peuvent évoluer des formes fibrillaires aux formes lamellaires dont les diverses caractéristiques ont été données ci-dessus.

Selon le procédé de la présente invention, l'alumine constituant les particules sphéroïdales mises en œuvre dans le mélange doit être, de préférence, sous au moins l'une des formes gamma, delta, thêta, c'est-à-dire que les produits provenant des divers procédés de fabrication décrits notamment ci-dessus doivent avoir été calcinés à une température comprise entre 550 et 1100°C. L'introduction dans le mélange des particules sphéroïdales calcinées à 550–1100°C permet de limiter le retrait lors de la calcination du produit final; elle permet également, en choisissant la température de calcination des particules sphéroïdales voisine de celle de l'utilisation des produits finaux, d'éviter un vieillissement thermique excessif des produits finaux lors de leur utilisation. Ainsi, selon un mode de mise en œuvre particulier de l'invention, et si l'on désire des billes d'alumine à double porosité présentant une excellente stabilité thermique aux hautes températures, il est préférable de mettre en œuvre dans le mélange des particules sphéroïdales d'alumine calcinées à haute température, l'alumine étant alors essentiellement sous forme delta et/ou thêta.

Selon la deuxième étape du procédé selon l'invention, on met en forme par coagulation des gouttes du mélange. La mise sous forme sphéroïdale et la gélification des gouttes peut être obtenue par diverses méthodes et notamment par les procédés décrits ci-après.

Selon un premier procédé des gouttes du mélange sont introduites dans un liquide non miscible à l'eau de telle façon que les gouttes forment des particules sensiblement sphériques, ces particules sont coagulées simultanément et/ou postérieurement à la mise en forme sphéroïdale par un agent gélifiant qui enlève les ligands stabilisants.

Le liquide non miscible à l'eau peut être tel que les gouttes chutent (densité du liquide inférieure à la densité des gouttes) ou montent (densité du liquide supérieure à la densité des gouttes) dans le liquide de traitement; comme exemple de liquides non miscibles à l'eau convenant aux fins du procédé de l'invention, on peut citer notamment le pétrole, le kérosène, le dodécylbenzène, le trichloréthylène, le perchloréthylène, les solvants organiques, les hydrocarbures et les huiles minérales en général.

L'agent gélifiant qui enlève les ligands stabilisants peut notamment être l'ammoniac, l'ammoniaque, le carbonate d'ammonium, les amines à longue chaîne (notamment celles commercialisées sous la marque Primène), l'hexaméthylène tétramine, l'urée.

Les gouttes ainsi traitées sont récupérées de leur milieu de mise en forme et/ou de coagulation.

Selon un mode de mise en œuvre préféré de l'invention, des gouttes du mélange sont introduites dans une colonne contenant une phase supérieure constituée par du pétrole et une phase aqueuse inférieure constituée par une solution d'ammoniaque. La mise en forme s'effectue dans la phase supérieure et la gélification essentiellement dans la phase inférieure. La température du pétrole est généralement voisine de la température ambiante. La solution d'ammoniaque doit avoir son pH maintenu à une valeur supérieure ou égale à 9. Le temps de séjour des gouttes dans l'ammoniaque est de quelques minutes et généralement inférieur à 15 minutes. Dans ces conditions, les billes recueillies sont suffisamment solides et ne sont pas déformées lors des manipulations subséquentes. Deux nouveaux avantages du procédé selon l'invention apparaissent notamment pour cette étape de mise en forme sphéroïdale et de gélification: la mise en forme s'effectue à température ambiante et par ailleurs la gélification s'opère très rapidement, ainsi, il n'est absolument pas nécessaire selon ce procédé d'opérer un vieillissement subséquent des billes dans une solution basique, celles-ci présentant une solidité suffisante, après un court temps de séjour dans la phase ammoniacale.

Selon un second procédé, des gouttes du mélange sont introduites (mises en suspension) dans un liquide non miscible, susceptible d'enlever l'eau des gouttes. Ce liquide non miscible extrait l'eau des gouttes et cause la gélification de celles-ci sous forme sphéroïdales, on peut utiliser par exemple le 2-éthyl-1-hexanol ou un alcool aliphatique à longue chaîne commercialisé sous la marque Octylol. Les principales étapes ainsi qu'un dispositif de mise en œuvre de ce procédé sont notamment décrits dans les articles de P.A. Haas, F.G. Kitts et H. Bentler dans Chemical Engineering Progress Symposium series 1967, 63, no 80, p. 16–27 et de I. Amato et D. Martorana dans Rev. Int. Hautes Temp. et Refract. 1972 t: 9 p. 197–204.

Selon un troisième procédé, on mélange le mélange obtenu selon la première étape du procédé de l'invention avec au moins un monomère hydrosoluble dont le polymère non réticulé est soluble dans l'eau ou forme un gel, on disperse ensuite le mélange obtenu sous formes de gouttes dans un milieu fluide chaud où se produit une polymérisation substantielle du monomère. Le monomère peut être un composé acrylique de formule générale

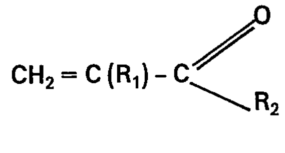

dans laquelle $R_1$ est H ou le radical méthyle, $R_2$ est un radical $OR_3$ ou $NR_3R_4$ où $R_3$ et $R_4$ représentent H ou un radical hydrophyle, notamment un radical hydroxyalkyle contenant en particulier 1 à 2 atomes de carbone ou un radical méthoxyméthyle. Les principales étapes de ce procédé ont notamment été décrites dans les brevets français no 2 261 056 et 2 261 057.

Les billes obtenues sont ensuite séparées de leur milieu de gélification puis séchées et calcinées à une température comprise entre 550 et 1100°C.

Les billes obtenues présentent un volume poreux total compris entre 0,55 et 1,7 $cm^3/g$; leur volume microporeux (constitué par les pores de diamètre inférieur à 0,06 μm) étant compris entre 0,5 et 1 $cm^3/g$, leur volume macroporeux (constitué par les pores de diamètre supérieur à 0,06 μm) étant compris entre 0,05 et 0,7 $cm^3/g$; le diamètre moyen des macropores étant compris entre 0,1 et 10 μm; la surface spécifique de ces billes étant comprise entre 80 et 350 $m^2/g$ (méthode BET produits séchés à 110°C), leur résistance à la rupture étant supérieure à 1 kg; l'alumine étant essentiellement sous forme d'au moins une des phases prise dans le groupe constitué par êta, gamma, delta, thêta.

Sans limiter la présente invention à la théorie, il semble que la double porosité des billes selon l'invention soit telle que leur microporosité provient de la microporosité des particules sphéroïdales d'alumine et du sol mis en œuvre et que leur macroporosité résulte des vides interparticulaires du mélange. Autrement dit, l'édifice microporeux provient de l'assemblage des particules microporeuses, la compacité de l'empilement et la répartition granulométrique de ces particules déterminent le volume macroporeux et la taille des macropores. C'est un des avantages présentés par le procédé selon la présente invention que de permettre d'obtenir des produits légers (c'est-à-dire possédant un grand volume poreux) à double porosité, très solides, sans addition d'agent porogène et ceci en jouant soit sur la microporosité soit sur la macroporosité. On peut penser que le sol mis en œuvre n'obture généralement pas les vides interparticulaires (donc permet d'assurer une certaine macroporosité à l'édifice) et assure suffisamment de liaisons entre les particules pour obtenir un produit très solide présentant de plus un empilement très homogène des particules.

Par ailleurs, les billes préparées selon le procédé de l'invention présentent une double porosité, c'est-à-dire qu'un certain volume dit macroporeux est constitué par des pores de diamètre supérieur à 0,06 μm et qu'un certain volume dit microporeux est constitué par des pores de diamètre inférieur à 0,06 μm. Le procédé de l'invention permet de fabriquer des billes ayant des micropores et des macropores dont les diamètres varient dans de larges limites; il est en particulier possible de fabriquer des produits bimodaux dont on peut faire varier indépendamment les diamètres et/ou les volumes des micropores et des macropores. Un avantage supplémentaire du procédé de l'invention apparaît ainsi dans la facilité de régler la répartition poreuse du produit désiré en fonction notamment des caractéristiques nécessaires pour l'application envisagée.

La surface spécifique mesurée par la méthode BET des billes obtenues selon le procédé de l'invention est comprise entre 80 et 350 $m^2/g$. Leur résistance à la rupture est supérieure à 1 kg. Cette résistance est déterminée comme la moyenne arithmétique sur 10 essais de la force nécessaire pour écraser une bille ayant un diamètre d'environ 3,5 mm par application d'une force continue et progressive à partir de la charge zéro.

Le procédé selon la présente invention permet d'obtenir des billes présentant une granulométrie ressérée, ce qui se traduit par l'obtention d'une perte de charge minimum et d'une activité catalytique optimum lors de leur mise en œuvre.

D'une manière générale, les billes obtenues selon le procédé de l'invention ont une résistance à l'attrition remarquable. On peut atteindre des résistances à l'attrition extrêmement fortes de l'ordre de 100%.

Par ailleurs, la stabilité thermique des billes obtenues selon le procédé de l'invention est excellente. En particulier, leur surface spécifique mesurée après une calcination de 24 heures à 982°C est supérieure à 90 $m^2/g$; après un tel traitement thermique, leur résistance à l'attrition et leur solidité ne sont pratiquement pas affectées et leur retrait reste inférieur à 4%.

Les billes préparées selon le procédé de l'invention peuvent être employées en adsorption ou en catalyse, et en particulier dans les réactions où la diffusion due aux macropores doit être importante. Ainsi, les billes d'alumine légères à double porosité préparées selon l'invention peuvent être utilisée comme catalyseur ou support de catalyseur pour effectuer diverses réactions telles que, par exemple: la déshydratation, l'hydrosulfuration, l'hydrodénitrification, la désulfuration, la déshydrohalogénation, le reformage, le reformage à la vapeur, le craquage, l'hydrocraquage, l'hydrogénation, la déshydrogénation, la déshydrocyclisation d'hydrocarbures ou autres composés organiques, les réactions d'oxydation et/ou de réduction, la réaction de Claus. Les billes préparées selon l'invention sont particulièrement efficaces comme support de catalyseur pour le traitement des gaz d'échappement des moteurs à combustion interne ou dans la purification des gaz résiduaires industriels. Lorsqu'elles sont utilisées comme supports de catalyseurs pour le traitement des gaz d'échappement des moteurs à combustion interne, leur association avec les métaux précieux du groupe VIII notamment, conduit à des catalyseurs extrêmement performants et possèdent une excellente stabilité thermique, dans ce cas en particulier, il peut être avantageux, compte tenu des températures d'utilisation de mettre en œuvre dans le procédé de l'invention des particules sphéroïdales d'alumine essentiellement sous forme delta et/ou thêta.

Par ailleurs, ainsi qu'il est bien connu de l'homme de l'art, les supports d'alumine préparés selon le procédé de l'invention peuvent avantageusement être stabilisés pour posséder une meilleure résistance aux hautes températures. Les agents stabilisants peuvent notamment être choisis parmi au moins un des éléments pris dans

le groupe comportant: les alcalini-terreux, la silice, les terres rares.

Les exemples suivants, donnés à titre non limitatif, illustrent l'invention sans en limiter la portée:

Exemple 1

On prépare des billes d'alumine à double porosité selon l'invention en appliquant le mode opératoire général suivant, dont les données sont rassemblées dans le tableau 1 ci-après.

D'une part, on prépare un sol de boehmite ultra-fine de la façon suivante:

On procède à la fabrication d'un gâteau de gel d'alumine par précipitation en continu, d'une solution d'aluminate de sodium, présentant un rapport pondéral $Al_2O_3/NA_2O$ d'environ 1,08 et une concentration de 100 g/l exprimée en $Al_2O_3$ par une solution d'acide nitrique de concentration telle que la suspension titre environ 50 g/l d'alumine comptée en $Al_2O_3$ et que le rapport compté moléculairement $NO_3/Al_2O_3$ soit de 0,16. Le pH de précipitation se situe aux environs de 9, on essore, on filtre et on lave le gâteau de gel ainsi préparé. On traite à 115°C pendant 24 heures ce gâteau dans un autoclave agité. Le produit obtenu se présente sous forme de pâte contenant 12% d'alumine comptée en $Al_2O_3$.

La surface spécifique, mesurée par la méthode BET, de ce produit séché à l'étuve à 110°C, est environ de 300 m²/g, la surface géométrique de ce produit mesurée après séchage obtenu par dispersion dans l'isopropanol, distillation azéotropique puis évaporation de l'isopropanol est d'environ 550 m²/g. La photographie de ce produit obtenue au microscope électronique montre qu'il est constitué de boehmite ultra-fine entièrement fibrillaire composée de monocristaux en forme de lattes longues et très étroites s'associant souvent en faisceaux, les monocristaux ayant une dimension longitudinale qui atteint environ 500 à 1000 Å (50–100 nm); suivant les deux autres directions, si l'on assimile les monocristaux à des cylindres, on peut déduire de la surface spécifique mesurée par la méthode BET que ces monocristaux ont un diamètre moyen de 55 Å (5·5 nm). Le diagramme Debye-Scherrer de ce produit présente des réflexions (hkl) absentes, un halo (012) et une réflexion nette (200).

D'autre part, on prépare des particules sphéroïdales d'alumine selon l'un des procédés 1, 2, 3 décrits ci-après:

1. On précipite en continu dans un réacteur à un pH maintenu à 8,7 et à la température de 35°C une solution d'aluminate de soude à 100 g/l d'alumine comptée en $Al_2O_3$ par une solution d'acide nitrique N. La suspension de gel d'alumine issue du réacteur est envoyée pour homogénéisation dans un bac tampon également maintenu à 35°C d'où elle est envoyée sur un filtre, le gâteau obtenu est lavé à l'eau permutée jusqu'à la disparition des ions dans le filtrat, puis essoré. Le gâteau essoré est alors remis en suspension par agitation dans de l'eau permutée de façon à pouvoir être pulvérisée au moyen d'une buse à la base d'un appareil de déshydratation. La température d'entrée des gaz est de 650°C, leur température de sortie de 300°C, le temps de contact est d'environ 1 seconde. Les particules sphéroïdales obtenues ont un diamètre inférieur à environ 50 µm et 70% de ces particules ont un diamètre inférieur à 16 µm. Ces particules sont calcinées à 950°C pendant 1 heure, l'alumine étant alors essentiellement sous forme thêta. Ces particules présentent un volume poreux de 0,90 cm³/g et une surface spécifique de 150 m²/g.

2. On prépare une alumine active par déshydratation rapide d'hydrargillite dans un réacteur à envolement à l'aide d'un courant de gaz chauds dont la température d'entrée est d'environ 800°C, le temps de contact est d'environ ½ seconde. Cette alumine présente une surface spécifique de 300 m²/g, une perte au feu de 4%, le diagramme de rayon X montre qu'il s'agit d'une alumine de structure mal cristallisée présentant notamment des raies diffuses vers 2,40 Å et 1,40 Å (0,24 et 0,14 nm) communes aux alumines de transition gamma, êta, chi. La dimension des particules est telle que 70% ont un diamètre inférieur à 17 µm.

On introduit 50 g d'alumine active dans un autoclave contenant 1 l d'une solution aqueuse d'acide nitrique présentant un pH de 0,85 de telle façon que le rapport molaire $NO_3/Al_2O_3$ soit égal à 0,3. L'autoclave est agité; on chauffe 8 heures à 130°C.

On obtient une suspension d'alumine contenant de la boehmite ultra-fine sous forme fibrillaire avec un taux de transformation d'environ 40%.

L'examen au microscope électronique à transmission de cette suspension d'alumine montre qu'il s'agit, pour la partie cristallisée, de boehmite ultra-fine entièrement sous forme fibrillaire composée de lattes longues et étroites dont la longueur est d'environ 2000 à 2500 Å (200 à 250 nm) et dont les deux autres dimensions sont comprises entre environ 20 et 50 Å (2 et 5 nm).

On sèche la suspension d'alumine par atomisation dans un courant de gaz chauds présentant une température d'entrée comprise entre environ 700 et 800°C.

Les particules sphéroïdales obtenues sont ensuite calcinées à 950°C, l'alumine est cristallisée essentiellement dans la phase thêta. Le produit présente une surface spécifique de 110 m²/g et un volume poreux de 0,48 cm³/g. Sa granulométrie est telle que 50% des particules ont un diamètre $\varnothing$ compris autour d'une valeur moyenne $\varnothing_M = 7$ µm tel que $\varnothing = \varnothing_M \pm 20\% \varnothing_M$.

3. La suspension de boehmite fine obtenue en 2 est diluée et traitée par une solution ammoniacale de façon à amener son pH à environ 9, la suspension est ensuite séchée et calcinée dans les mêmes conditions que décrit ci-dessus en 2), les particules obtenues présentent la même répartition granulométrique et la même surface spécifique, leur volume poreux est de 0,60 cm³/g.

On mélange le sol de boehmite ultra-fine avec diverses proportions des particules sphéroïdales

d'alumine respectivement préparées selon les procédés 1, 2, 3 à un pH compris entre 6 et 7.

On forme des gouttes de ce mélange par l'intermédiaire de tubes calibrés présentant un diamètre intérieur d'environ 2,5 mm. Les gouttes tombent dans une colonne de 600 mm de diamètre contenant une couche de pétrole d'environ 6 centimètres flottant sur une solution ammoniacale de concentration d'environ 20 g/l. Le temps de séjour des particules dans la solution ammoniacale est d'environ 2 minutes. Les gouttes s'arrondissent dans le pétrole et gélifient dans la solution ammoniacale. Les billes recueillies sont très rigides et subissent sans déformation les opérations de transvasement, elles sont ensuite séchée et calcinées à 950°C pendant 1 heure. Elles présentent un diamètre d'environ 3,5 à 4 mm.

Exemple 2

On prépare des billes d'alumine à double porosité de l'invention en mettant en œuvre le même sol de boehmite ultra-fine que celui décrit à l'exemple 1 (à l'exception de l'essai no 11) et des particules sphéroïdales d'alumine dont les caractéristiques sont rassemblées dans le tableau 2 ci-après.

On opère de manière similaire à celle décrite dans l'exemple 1, les caractéristiques des billes obtenues sont données dans le tableau.

Tableau

| | | Particules sphéroïdales | | | | | | |
|---|---|---|---|---|---|---|---|---|
| | | 1 | 2 | 3 | 4 | 5 | 6 | 7 |
| Sol de départ | Concentration en alumine comptée en $Al_2O_3$ | 12 | 12 | 12 | 12 | 12 | 12 | 12 |
| Particules sphéroïdales | Phase de l'alumine | thêta | thêta | thêta | thêta | thêta | thêta | thêta |
| | Volume microporeux en $cm^3/g$ | 0,90 | 0,48 | 0,60 | 0,60 | 0,60 | 0,60 | 0,60 |
| | Surface spécifique en $m^2/g$ | 150 | 110 | 110 | 110 | 110 | 110 | 110 |
| | Diamètre moyen des particules $\varnothing_M$ en µm | 9,5 | 7 | 7 | 12 | 7 | 7 | 4 |
| Mélange | pH | 6 | 7 | 7 | 7 | 7 | 7 | 7 |
| Mise en forme | Proportion de particules sphéroïdales par rapport au sol de départ (rapportée aux solides totaux comptés en $Al_2O_3$ | 50 | 76 | 76 | 76 | 90 | 40 | 76 |
| | Température de calcination des billes en °C | 950 | 950 | 950 | 950 | 950 | 950 | 950 |
| Caractéristiques des billes obtenues | Volume poreux total en $cm^3/g$ | 0,90 | 0,85 | 1,16 | 1,20 | 1,30 | 0,70 | 0,80 |
| | Volume microporeux en $cm^3/g$ | 0,80 | 0,50 | 0,62 | 0,60 | 0,60 | 0,60 | 0,60 |
| | Volume macroporeux en $cm^3/g$ | 0,10 | 0,35 | 0,54 | 0,60 | 0,70 | 0,10 | 0,20 |
| | Diamètre moyen des macropores en µm | 1,2 | 1,7 | 1,7 | 4 | 1,5 | 0,5 | 0,5 |
| | Surface spécifique en $m^2/g$ | 150 | 100 | 99 | 100 | 100 | 100 | 100 |
| | Résistance à la rupture en kg | 5 | 6 | 4,5 | 2 | 1,5 | 6,5 | 7 |

## Revendications

1. Procédé de fabrication de billes d'alumine à double porosité, du type dans lequel on forme un mélange à base de boehmite ou pseudo-boehmite, on met sous forme sphéroïdale, on gélifie les gouttes du mélange et on récupère les billes gélifiées que l'on sèche et que l'on calcine à une température comprise entre 550 et 1100°C; caractérisé en ce que le mélange précité est obtenu de la manière suivante:

on mélange à un pH inférieur à 7,5: d'une part, un sol de boehmite ultra-fine ou de pseudo-boehmite, le sol de boehmite étant exempt d'alumine amorphe, la concentration en poids du sol exprimée en $Al_2O_3$ étant comprise entre 5 et 25% et, d'autre part, dans une proportion comprise entre 30 et 95% en poids (rapporté aux solides totaux), des particules sphéroïdales d'alumine essentiellement sous forme d'au moins une des phases prise dans le groupe constitué par êta, gamma, delta, thêta; ces particules présentant un volume microporeux compris entre 0,4 et 1 $cm^3/g$, une surface spécifique comprise entre 100 et 350 $m^2/g$, le diamètre des particules étant compris entre 1 et 50 micromètres, au moins 50% des particules sphéroïdales ayant un diamètre $\varnothing$ compris autour d'une valeur moyenne $\varnothing_M$ tel que $\varnothing = \varnothing_M \pm 20\% \varnothing_M$.

2. Procédé selon la revendication 1, caractérisé en ce que le pH du mélange est compris entre 3 et 7.

3. Procédé selon la revendication 1, caractérisé en ce que les boehmites ultra-fines mises en œuvre sont constituées de monocristaux dont les morphologies dominantes détectées par les diagrammes Debye-Scherrer peuvent évoluer des formes fibrillaires aux formes lamellaires.

4. Procédé selon la revendication 3, caractérisé en ce que le diagramme Debye-Scherrer des boehmites ultra-fines fibrillaires, mises en œuvre, montre que le produit est une boehmite présentant des monocristaux développés essentiellement dans une seule direction cristallographique sous forme de lattes longues et étroites (réflexions [020] et [125] très atténuées, [105] normalement intense) jusqu'aux monocristaux sous forme de lattes longues et très étroites (réflexions [hkl] absentes, halo [012] et réflexion nette [200]); les cristallites ont une longueur comprise entre 500 et 5000 Å, suivant les autres directions, leurs dimensions sont comprises entre 10 et 100 Å (1 et 10 nm); ces produits séchés à 110°C présentent des surfaces spécifiques comprises entre 50 et 600 $m^2/g$.

5. Procédé selon la revendication 3, caractérisé en ce que le diagramme Debye-Scherrer des boehmites ultra-fines lamellaires mises en œuvre fait apparaître de nombreuses réflexions caractéristiques d'un faciès tabulaire présentant encore le clivage (002) correspondant aux plans d'oxydriles de la boehmite bien cristallisée sous forme de:

- plaquettes rhombiques (réflexions [002] et [105] partiellement éteintes, [008] totalement éteinte),
- plaquette rhombiques allongées probablement suivant la direction (110) (doublet [020], [105] non résolu, réflexions [002] et [008] normalement intenses),
- lattes longues et élargies (réflexions [002] partiellement éteinte, [008] et [105] totalement éteintes); la méthode de Warren appliquée à ces boehmites ultra-fines lamellaires montre que les cristallites présentent au moins deux dimensions de croissance, comprises entre 100 et 5000 Å (10 et 500 nm), l'épaisseur des cristallites constituant la troisième dimension étant comprise entre 20 et 100 Å (2 et 10 nm); ces produits séchés à 110°C présentent des surfaces spécifiques comprises entre 100 et 300 $m^2/g$.

6. Procédé selon la revendication 1, caractérisé en ce que le sol de boehmite a été obtenu par chauffage d'une dispersion aqueuse d'alumine en présence d'un radical d'acide fort monovalent, la dispersion aqueuse d'alumine ayant été préparée à partir de chlorure basique d'aluminium, de nitrate basique d'aluminium, d'hydroxyde d'aluminium, de gel d'alumine ou de solutions colloïdales d'alumine.

7. Procédé selon la revendication 1, caractérisé en ce que le sol de boehmite ultra-fine a été obtenu par évolution à une température comprise entre 60 et 150°C d'une suspension ou d'un gâteau de gel d'alumine hydratée amorphe contenant jusqu'à 35% en poids d'alumine comptée en $Al_2O_3$, et par rapport à cette alumine comptée en molécules d'$Al_2O_3$, une quantité d'ions acides monovalents variant de 0,05 à 0,5, pendant un temps de 15 heures à 10 jours; le gâteau ayant été obtenu par essorage, lavage et filtration de gel d'alumine précipité en continu à un pH compris entre 8 et 9 à partir d'une solution d'aluminate de soude et d'acide nitrique.

8. Procédé selon la revendication 1, caractérisé en ce que la pseudo-boehmite mise en œuvre est choisie parmi le groupe constitué par les pseudo-boehmites b, a et recristallisées.

9. Procédé selon la revendication 1, caractérisé en ce que les particules sphéroïdales ont un volume microporeux compris entre 0,7 et 1 $cm^3/g$.

10. Procédé selon la revendication 1, caractérisé en ce que les particules sphéroïdales ont été broyées.

11. Procédé selon la revendication 1, caractérisé en ce que les particules sphéroïdales d'alumine ont été préparées par précipitation d'une solution aqueuse d'un sel d'aluminium par une solution d'u aluminate alcalin, atomisation du précipité obtenu puis remise en suspension dans une solution aqueuse ayant un pH compris entre 4,5 et 7, atomisation et séchage de la bouillie d'alumine obtenue puis lavage, séchage et calcination à une température comprise entre 550 et 1100°C.

12. Procédé selon la revendication 1, caractérisé en ce que les particules sphéroïdales d'alumine ont été préparées par précipitation d'un gel

d'alumine à un pH compris entre 7,5 et 11, lavage, essorage, remise en suspension puis déshydratation rapide dans un courant de gaz chauds à une température d'entrée comprise entre 350 et 1000°C, puis calcination à une température comprise entre 550 et 1100°C.

13. Procédé selon la revendication 1, caractérisé en ce que les particules sphéroïdales d'alumine ont été préparées par précipitation d'un gel d'alumine à un pH compris entre 7 et 10,5, mûrissement du précipité à un pH compris entre 10 et 11, homogénéisation et atomisation à 250–550°C de la bouillie obtenue, puis calcination à une température comprise entre 550 et 1100°C.

14. Procédé selon la revendication 1, caractérisé en ce que les particules sphéroïdales d'alumine ont été préparées par précipitation d'un aluminate alcalin par un acide minéral à une température comprise entre 30 et 75°C, mûrissement dans un second réacteur à 30–75°C à un pH voisin de 7, recyclage de la bouillie obtenue dans le réacteur de mélange, filtration, lavage, séchage par atomisation, puis calcination à une température comprise entre 550 et 1100°C.

15. Procédé selon la revendication 1, caractérisé en ce que les particules sphéroïdales d'alumine ont été préparées par atomisation puis calcination à une température comprise entre 550 et 1100°C de suspensions aqueuses de boehmite ultra-fine, de pseudo-boehmite et/ou d'alumine amorphe.

16. Procédé selon la revendication 1, caractérisé en ce que les particules sphéroïdales d'alumine ont été préparées par traitement par une base décomposable en produits volatils de dispersions aqueuses de boehmite ultra-fine, de pseudo-boehmite et/ou d'alumine amorphe, puis séchage et calcination à une température comprise entre 550 et 1100°C.

17. Procédé selon la revendication 16, caractérisé en ce que le traitement par la base décomposable est effectué en amenant le pH de la dispersion à une valeur comprise entre 8 et 9,5.

18. Procédé selon la revendication 1, caractérisé en ce que les particules sphéroïdales d'alumine on été obtenues selon le procédé comportant les étapes suivantes:
- préparation d'une dispersion aqueuse d'alumine au moins partiellement sous forme de boehmite ultra-fine par traitement d'une poudre d'alumine active présentant une structure mal cristallisée et/ou amorphe dans un milieu aqueux ayant un pH inférieur à 9;
- traitement éventuel de la suspension par une base décomposable en produits volatils;
- atomisation de la suspension;
- calcination à une température comprise entre 550 et 1100°C.

19. Procédé selon la revendication 18, caractérisé en ce que la poudre d'alumine active mise en œuvre a été obtenue par déshydratation rapide d'hydroxydes ou d'oxyhydroxydes d'aluminium dans un courant de gaz chauds.

20. Procédé selon la revendication 18, caractérisé en ce que le milieu aqueux est constitué par l'eau et/ou par tout acide et/ou sel qui se dissocie dans l'eau, en libérant un anion, pour donner une solution ayant un pH inférieur à 9.

21. Procédé selon la revendication 1, caractérisé en ce que la mise en forme et la gélification des gouttes du mélange sont opérées par introduction des gouttes dans un liquide non miscible à l'eau, de telle façon que les gouttes forment des billes, ces billes sont coagulées simultanément et/ou postérieurement par un agent gélifiant qui enlève les ligands stabilisants.

22. Procédé selon la revendication 21, caractérisé en ce que le liquide non miscible à l'eau est choisi parmi le groupe comportant: le pétrole, le kérosène, le dodécylbenzène, le trichloréthylène, les solvants organiques, les hydrocarbures et les huiles minérales en général.

23. Procédé selon la revendication 21, caractérisé en ce que l'agent gélifiant est choisi parmi le groupe comportant: l'ammoniac, l'ammoniaque, le carbonate d'ammonium, les amines à longues chaînes, l'hexaméthylène tétramine, l'urée.

24. Procédé selon la revendication 21, caractérisé en ce que des gouttes du mélange sont introduites dans une colonne contenant une phase supérieure constituée par du pétrole et une phase aqueuse inférieure constituée par une solution d'ammoniaque; la mise en forme s'effectue dans la phase supérieure et la gélification essentiellement dans la phase inférieure; la température du pétrole est voisine de la température ambiante; le pH de la solution d'ammoniaque est maintenu à une valeur supérieure ou égale à 9; le temps de séjour des gouttes dans l'ammoniaque est de quelques minutes et inférieur à 15 minutes.

25. Procédé selon la revendication 1, caractérisé en ce que la mise en forme et la gélification des gouttes du mélange sont opérées par introduction des gouttes du mélange dans un liquide non miscible susceptible d'enlever l'eau des gouttes.

26. Procédé selon la revendication 1, caractérisé en ce que la mise en forme et la gélification des gouttes du mélange sont opérées par mélange des gouttes du mélange avec au moins un monomère hydrosoluble dont le polymère non réticulé est soluble dans l'eau ou forme un gel et dispersion des gouttes du mélange ainsi formé dans un milieu fluide chaud.

27. Procédé selon la revendication 1, caractérisé en ce que la concentration du sol de boehmite ou de pseudo-boehmite est comprise entre 10 et 15%.

28. Procédé selon la revendication 1, caractérisé en ce que la proportion entre le sol de boehmite ultra-fine et les particules sphéroïdales d'alumine est comprise entre 65 et 90% en poids.

29. Procédé selon la revendication 1, caractérisé en ce que les particules sphéroïdales d'alumine ont un diamètre compris entre 5 et 10 micromètres.

**Patentansprüche**

1. Verfahren zur Herstellung von Aluminiumoxidkugeln mit doppelter Porosität des Typs, bei dem man ein Gemisch auf Basis von Böhmit oder pseudo-Böhmit bildet, in sphäroidische Form bringt, die Tropfen des Gemischs geliert und die gelierten Kugeln, die man trocknet und bei einer Temperatur zwischen 550 und 1100°C calciniert, gewinnt, dadurch gekennzeichnet, dass das vorgenannte Gemisch auf die nachfolgende Weise erhalten wird:

Man mischt bei einem pH unterhalb von 7,5 einerseits ein Sol von ultrafeinem Böhmit oder pseudo-Böhmit, wobei das Böhmit-Sol frei von amorphem Aluminiumoxid ist, die Konzentration des Sols berechnet als $Al_2O_3$ 5 bis 25 Gewichtsprozent beträgt und andererseits in einem Gewichtsverhältnis von zwischen 30 und 95 Gew.-% (bezogen auf die gesamten Feststoffe) sphäroidische Aluminiumoxidteilchen, die im wesentlichen in Form wenigstens einer der Phasen Eta, Gamma, Delta und Theta vorliegen, wobei diese Teilchen ein Mikroporenvolumen zwischen 0,4 und 1 $cm^3/g$, eine spezifische Oberfläche zwischen 100 und 350 $m^2/g$ aufweisen und der Teilchendurchmesser zwischen 1 und 50 Mikrometern beträgt und wenigstens 50% der sphäroidischen Teilchen einen Durchmesser $\varnothing$ haben, der um einen Mittelwert $\varnothing_M$ liegt, so dass $\varnothing = \varnothing_M \pm 20\% \varnothing_M$.

2. Verfahren nach Anspruch 1, dadurch gekennzeichnet, dass der pH des Gemisches zwischen 3 und 7 liegt.

3. Verfahren nach Anspruch 1, dadurch gekennzeichnet, dass der eingesetzte ultrafeine Böhmit aus Einkristallen besteht, deren vorherrschende Morphologie, bestimmt durch die Debye-Scherrer-Diagramme, sich von Faser-Formen zu lamellaren Formen entwickeln kann.

4. Verfahren nach Anspruch 3, dadurch gekennzeichnet, dass das Debye-Scherrer-Diagramm der eingesetzten ultrafeinen faserförmigen Böhmite zeigt, dass das Produkt ein Böhmit mit im wesentlichen in einer kristallographischen Richtung in Form von langen schmalen Latten entwickelten Monokristallen (Reflexion [020] und [125] sehr schwach, [105] normal stark) bis zu Monokristallen in Form von langen und sehr schmalen Latten (Reflexion [hkl] fehlend, Halo [012] und deutliche Reflexion [200]), die Kristallite eine Länge von 500 bis 5000 Å haben und ihre Abmessungen in den anderen Richtungen 10 bis 100 Å (1 bis 10 nm) betragen, und diese bei 110°C getrockneten Produkte spezifische Oberflächen zwischen 50 und 600 $m^2/g$ haben.

5. Verfahren nach Anspruch 3, dadurch gekennzeichnet, dass das Debye-Scherrer-Diagramm der eingesetzten ultrafeinen lamellaren Böhmite zahlreiche charakteristische Reflexionen einer tafelförmigen Fazies zeigt, die nach Spaltung (002) entsprechend den Hydroxylgruppenebenen des in den folgenden Formen gut kristallisierten Böhmits aufweist:

- rhombische Plättchen (Reflexionen [002] und [105] teilweise erloschen, [008] vollkommen erloschen),
- rhombische wahrscheinlich in der Richtung (110) verlängerte Plättchen (Dulbet [020], [105] nicht aufgelöst, Reflexionen [002] und [008] normal stark),
- lange verbreiterte Latten (Reflexionen [002] zum Teil erloschen, [008] und [105] vollkommen erloschen); die Warren-Methode, angewandt auf diese ultrafeinen lamellaren Böhmite, zeigt, dass die Kristalle wenigstens zwei Wachstumsdimensionen zwischen 100 und 5000 Å (10 und 500 nm) haben, wobei die Dicke der Kristallite, die die dritte Dimension bildet, 20 bis 100 Å (2 bis 10 nm) beträgt; die bei 110°C getrockneten Produkte haben spezifische Oberflächen zwischen 100 und 300 $m^2/g$.

6. Verfahren nach Anspruch 1, dadurch gekennzeichnet, dass das Böhmit-Sol durch Erhitzen einer wässrigen Dispersion von Aluminiumoxid in Gegenwart eines starken einwertigen Säurerests erhalten wurde, wobei die wässrige Dispersion des Aluminiumoxids aus basischem Aluminiumchlorid, basischem Aluminiumnitrat, Aluminiumhydroxid, Aluminiumoxidgel oder kolloidalen Lösungen von Aluminiumoxid hergestellt wurde.

7. Verfahren nach Anspruch 1, dadurch gekennzeichnet, dass das Sol von ultrafeinem Böhmit durch Alterung einer Suspension oder eines Kuchens von amorphem hydratisiertem Aluminiumoxidgel, die bis zu 35 Gew.% Aluminiumoxid, gerechnet als $Al_2O_3$, und bezogen auf dieses Aluminiumoxid, gerechnet in $Al_2O_3$-Molekülen eine Menge einwertiger Säureionen zwischen 0,05 und 0,5 enthalten, bei einer Temperatur zwischen 60 und 150°C und während einer Zeit von 15 Stunden bis 10 Tagen hergestellt wurde, wobei der Kuchen durch Absaugen, Waschen und Filtration eines Aluminiumoxidgels erhalten wurde, das kontinuierlich bei einem pH zwischen 8 und 9 aus einer Lösung von Natriumaluminat und Salpetersäure gefällt wurde.

8. Verfahren nach Anspruch 1, dadurch gekennzeichnet, dass der eingesetzte pseudo-Böhmit aus der von den pseudo-Böhmiten b und a sowie den rekristallisierten pseudo-Böhmiten gebildeten Gruppe ausgewählt ist.

9. Verfahren nach Anspruch 1, dadurch gekennzeichnet, dass die sphäroidischen Teilchen ein Mikroporenvolumen zwischen 0,7 und 1 $cm^3/g$ haben.

10. Verfahren nach Anspruch 1, dadurch gekennzeichnet, dass die sphärischen Teilchen gemahlen wurden.

11. Verfahren nach Anspruch 1, dadurch gekennzeichnet, dass die sphärischen Teilchen des Aluminiumoxids durch Fällung einer wässrigen Lösung eines Aluminiumsalzes mit einer Lösung eines alkalischen Aluminats, Versprühen des erhaltenen Niederschlags, wieder Suspendieren in einer wässrigen Lösung mit einem pH zwischen 4,5 und 7, Versprühen und Trocknen des erhaltenen Breis und dann durch Waschen, Trocknen und Calcinierung bei einer Temperatur zwischen 550 und 1100°C erhalten wurden.

12. Verfahren nach Anspruch 1, dadurch gekennzeichnet, dass die sphäroidischen Aluminiumoxidteilchen durch Fällung eines Aluminiumoxidgels bei einem pH-Wert zwischen 7,5 und 11, Waschen, Absaugen, Wiedersuspendieren, rascher Entwässerung in einem Strom heisser Gase bei einer Eintrittstemperatur zwischen 350 und 1000°C und Calcinierung bei einer Temperatur zwischen 550 und 1100°C erhalten wurden.

13. Verfahren nach Anspruch 1, dadurch gekennzeichnet, dass die sphäroidischen Aluminiumoxidteilchen durch Fällung eines Aluminiumoxidgels bei einem pH-Wert zwischen 7 und 10,5, Reifen des Niederschlags bei einem pH zwischen 10 und 11, Homogenisierung und Versprühung des erhaltenen Breis bei 250 bis 550°C und dann durch Calcinierung bei einer Temperatur zwischen 550 und 1100°C erhalten wurden.

14. Verfahren nach Anspruch 1, dadurch gekennzeichnet, dass die sphäroidischen Aluminiumoxidteilchen durch Fällung eines alkalischen Aluminats mit einer Mineralsäure bei einer Temperatur zwischen 30 und 75°C, Reifen in einem zweiten Reaktor bei 30 bis 75°C bei einem pH in der Nähe von 7, Rückführung des erhaltenen Breis in den Mischreaktor, Filtrieren, Waschen, Trocknen durch Versprühen und Calcinierung bei einer Temperatur zwischen 550 und 1100°C erhalten wurden.

15. Verfahren nach Anspruch 1, dadurch gekennzeichnet, dass die sphäroidischen Aluminiumoxidteilchen durch Versprühen von wässrigen Lösungen von ultrafeinem Böhmit, pseudo-Böhmit und/oder amorphem Aluminiumoxid und anschliessende Calcinierung bei einer Temperatur zwischen 550 und 1100°C erhalten wurden.

16. Verfahren nach Anspruch 1, dadurch gekennzeichnet, dass die sphäroidischen Aluminiumoxidteilchen durch Behandlung von wässrigen Dispersionen von ultrafeinem Böhmit, pseudo-Böhmit und/oder amorphem Aluminiumoxid mit einer zu flüchtigen Bestandteilen zersetzbaren Base, anschliessendes Trocknen und Calcinierung bei einer Temperatur zwischen 550 und 1100°C erhalten wurden.

17. Verfahren nach Anspruch 16, dadurch gekennzeichnet, dass die Behandlung mit der zersetzbaren Base dadurch durchgeführt wird, dass die Dispersion auf einen pH-Wert zwischen 8 und 9,5 gebracht wird.

18. Verfahren nach Anspruch 1, dadurch gekennzeichnet, dass die sphäroidischen Aluminiumoxidteilchen nach einem die folgenden Stufen enthaltenden Verfahren hergestellt wurden:

- Herstellung einer wässrigen Dispersion von Aluminiumoxid, das wenigstens teilweise in Form von ultrafeinem Böhmit vorliegt, durch Behandlung eines Pulvers von aktivem Aluminiumoxid mit einer schlecht kristallisierten und/oder amorphen Struktur in einem wässrigen Milieu mit einem pH unter 9;
- gegebenenfalls Behandlung der Suspension mit einer zu flüchtigen Bestandteilen zersetzbaren Base;
- Versprühen der Suspension;
- Calcinierung bei einer Temperatur zwischen 550 und 1100°C.

19. Verfahren nach Anspruch 18, dadurch gekennzeichnet, dass das eingesetzte aktive Aluminiumoxidpulver durch rasche Entwässerung von Hydroxiden oder Oxyhydroxiden des Aluminiums in einem Strom heisser Gase erhalten wurde.

20. Verfahren nach Anspruch 18, dadurch gekennzeichnet, dass das wässrige Milieu aus Wasser und/oder jeder Säure und/oder jedem Salz besteht, das sich in Wasser unter Bildung eines Anions löst, um eine Lösung eines pH-Werts unter 9 zu ergeben.

21. Verfahren nach Anspruch 1, dadurch gekennzeichnet, dass die Formgebung und die Gelierung der Tröpfchen des Gemisches durch Zugabe der Tropfen in eine mit Wasser nicht mischbare Flüssigkeit in der Weise durchgeführt wird, dass die Tropfen Kugeln bilden, und diese Kugeln gleichzeitig und/oder anschliessend mit einem Gelierungsmittel, das die stabilisierenden Liganden entfernt, koaguliert werden.

22. Verfahren nach Anspruch 21, dadurch gekennzeichnet, dass die mit Wasser nicht mischbare Flüssigkeit aus der folgenden Gruppe ausgewählt ist: Petroleum, Kerosin, Dodecylbenzol, Trichlorethylen, organischen Lösungsmitteln, Kohlenwasserstoffen und Mineralölen im allgemeinen.

23. Verfahren nach Anspruch 21, dadurch gekennzeichnet, dass das Gelierungsmittel aus der folgenden Gruppe ausgewählt ist: Ammoniak, Salmiakgeist, Ammoniumcarbonat, langkettigen Aminen, Hexamethylentetramin, Harnstoff.

24. Verfahren nach Anspruch 21, dadurch gekennzeichnet, dass die Tropfen des Gemisches in eine Säule eingeführt werden, die eine obere aus Petroleum bestehende Phase und eine untere wässrige Phase enthält, die aus einer ammoniakalischen Lösung besteht, dass die Formgebung im wesentlichen in der oberen Phase und die Gelierung im wesentlichen in der unteren Phase erfolgt, dass die Temperatur in der Nähe der Raumtemperatur ist, dass der pH-Wert der ammoniakalischen Lösung bei einem Wert gleich oder über 9 gehalten wird und dass die Verweilzeit der Tropfen in dem Ammoniakwasser wenige Minuten und weniger als 15 Minuten beträgt.

25. Verfahren nach Anspruch 1, dadurch gekennzeichnet, dass die Formgebung und Gelierung der Tropfen des Gemisches durch Zugabe der Tropfen des Gemisches in eine nicht mischbare Flüssigkeit erfolgt, die das Wasser aus dem Tropfen entfernen kann.

26. Verfahren nach Anspruch 1, dadurch gekennzeichnet, dass die Formgebung und Gelierung der Tropfen des Gemisches durch Vermischen der Tropfen des Gemisches mit wenigstens einem wasserlöslichen Monomeren erfolgen, dessen nicht vernetztes Polymeres in Wasser löslich ist oder ein Gel bildet, und Dispersion der Tropfen des so gebildeten Gemisches in einem warmen, fluiden Medium.

27. Verfahren nach Anspruch 1, dadurch gekennzeichnet, dass die Konzentration des Böhmit- oder pseudo-Böhmit-Sols 10 bis 15% beträgt.

28. Verfahren nach Anspruch 1, dadurch gekennzeichnet, dass das Verhältnis des Sols von ultrafeinem Böhmit zu den sphäroidischen Aluminiumoxidteilchen 65 bis 90 Gewichtsprozent beträgt.

29. Verfahren nach Anspruch 1, dadurch gekennzeichnet, dass die sphäroidischen Aluminiumoxidteilchen einen Durchmesser zwischen 5 und 10 μm haben.

**Claims**

1. Process for the manufacture of dual-porosity alumina beads, of the type in which a mixture based on boehmite or pseudoboehmite is formed and is made into a spheroidal shape, the drops of the mixture are gelled, and the gelled beads are recovered, are dried, and are calcined at a temperature of between 550 and 1,100°C, characterized in that the abovementioned mixture is obtained in the following manner:
the following are mixed at a pH of less than 7.5: on the one hand a sol of ultrafine boehmite or of pseudoboehmite, the boehmite sol being free of amorphous alumina and the concentration by weight of the sol, expressed as $Al_2O_3$, being between 5 and 25%, and, on the other hand, in a proportion of between 30 and 95% by weight (relative to the total solids), spheroidal alumina particles essentially in the form of at least one phase taken from the group comprising the eta, gamma, delta and theta phases, these particles having a micropore volume of between 0.4 and 1 $cm^3/g$ and a specific surface area of between 100 and 350 $m^2/g$, and the particles diameter being between 1 and 50 micrometres, at least 50% of the spheroidal particles having a diameter ∅ of about a mean value $\varnothing_M$ such that $\varnothing = \varnothing_M \pm 20\% \varnothing_M$.

2. Process according to Claim 1, characterized in that the pH of the mixture is between 3 and 7.

3. Process according to Claim 1, characterized in that the ultrafine boehmites used consist of single crystals in which the dominant morphologies, detected by the Debye-Scherrer patterns, can change from the fibrillar forms to the lamellar forms.

4. Process according to Claim 3, characterized in that the Debye-Scherrer pattern of the fibrillar ultrafine boehmites used shows that the product is a boehmite possessing single crystals developed essentially in only one crystallographic direction in the form of long and narrow slats ([020] and [125] reflections very weak, [105] reflection of normal intensity) up to single crystals in the form of long and very narrow slats ([hkl] reflections absent, [012] halo and [200] reflection sharp); the crystallites have a length of between 500 and 5,000 Å, in the other directions, their dimensions are between 10 and 100 Å (1 and 10 nm); these products, dried at 110°C, have specific surface areas of between 50 and 600 $m^2/g$.

5. Process according to Claim 3, characterized in that the Debye-Scherrer pattern of the lamellar ultrafine boehmites used shows numerous reflections characteristic of a tabular habit still having the (002) cleavage corresponding to the hydroxyl planes of highly crystalline boehmite in the form of:
- rhombic plates ([002] and [105] reflections partially extinct, [008] reflection totally extinct),
- rhombic plates elongated probably in the (110) direction ([020], [105] doublet unresolved, [002] and [008] reflections of normal intensity), and
- long and broadened slats ([002] reflection partially extinct, [008] and [105] reflections totally extinct); Warren's method applied to these lamellar ultrafine boehmites shows that the crystallites have at least two growth dimensions of between 100 and 5,000 Å (10 and 500 nm), the thickness of the crystallites, constituting the third dimension, being between 20 and 100 Å (2 and 10 nm); these products, dried at 110°C, have specific surface areas of between 100 and 300 $m^2/g$.

6. Process according to Claim 1, characterized in that the boehmite sol has been obtained by heating an aqueous dispersion of alumina in the presence of a monovalent radical of a strong acid, the aqueous dispersion of alumina having been prepared from basic aluminium chloride, basic aluminium nitrate, aluminium hydroxide, alumina gel or colloidal solutions of alumina.

7. Process according to Claim 1, characterized in that the ultrafine boehmite sol has been obtained by developing, at a temperature of between 60 and 150°C, a suspension or a cake of amorphous hydrated alumina gel containing up to 35% by weight of alumina, calculated as $Al_2O_3$, and, relative to this alumina, calculated as $Al_2O_3$ molecules, an amount of monovalent acid ions varying from 0.05 to 0.5, for a period of 15 hours to 10 days, the cake having been obtained by draining, washing and filtering alumina gel precipitated continuously at a pH of between 8 and 9 from a solution of sodium aluminate and nitric acid.

8. Process according to Claim 1, characterized in that the pseudoboehmite used is chosen from amongst the group comprising pseudoboehmites b and a and recrystallised pseudoboehmites.

9. Process according to Claim 1, characterized in that the spheroidal particles have a micropore volume of between 0.7 and 1 $cm^3/g$.

10. Process according to Claim 1, characterized in that the spheroidal particles have been ground.

11. Process according to Claim 1, characterized in that the spheroidal alumina particles have been prepared by precipitation of an aqueous solution of an aluminium salt by means of a solution of an alkali metal aluminate, spraying of the precipitate obtained and then resuspension in an aqueous solution having a pH of between 4.5 and 7, spraying and drying of the alumina slurry obtained and then washing, drying and calcination at a temperature of between 550 and 1,100°C.

12. Process according to Claim 1, characterized in that the spheroidal alumina particles have been prepared by precipitation of an alumina gel at a pH of between 7.5 and 11, washing, draining,

resuspension and then rapid dehydration in a stream of hot gases at an inlet temperature of between 350 and 1,000°C, and then calcination at a temperature of between 550 and 1,100°C.

13. Process according to Claim 1, characterized in that the spheroidal alumina particles have been prepared by precipitation of an alumina gel at a pH of between 7 and 10.5, ageing of the precipitate at a pH of between 10 and 11, homogenization and spraying at 250–550°C of the slurry obtained, and then calcination at a temperature of between 550 and 1,100°C.

14. Process according to Claim 1, characterized in that the spheroidal alumina particles have been prepared by precipitation of an alkali metal aluminate by means of a mineral acid at a temperature of between 50 and 75°C, ageing in a second reactor at 30–75°C at a pH of the order of 7, recycling of the slurry obtained into the mixing reactor, filtration, washing, spray-drying and then calcination at a temperature of between 550 and 1,100°C.

15. Process according to Claim 1, characterized in that the spheroidal alumina particles have been prepared by spraying and then calcination at a temperature of between 550 and 1,100°C of aqueous suspensions of ultrafine boehmite, pseudoboehmite and/or amorphous alumina.

16. Process according to Claim 1, characterized in that the spheroidal alumina particles have been prepared by treatment, with a base which can decompose into volatile products, of aqueous dispersions of ultrafine boehmite, pseudoboehmite and/or amorphous alumina, and then drying and calcination at a temperature of between 550 and 1,100°C.

17. Process according to Claim 16, characterized in that the treatment with the decomposable base is carried out by bringing the pH of the dispersion to a value of between 8 and 9.5.

18. Process according to Claim 1, characterized in that the spheroidal alumina particles have been obtained by the process comprising the following steps:

- preparation of an aqueous dispersion of alumina which is at least partially in the form of ultrafine boehmite, by treatment of an active alumina powder having a poorly crystalline and/or amorphous structure, in an aqueous medium having a pH of less than 9;
- if appropriate, treatment of the suspension with a base which can decompose into volatile products;
- spraying of the suspension; and
- calcination at a temperature of between 550 and 1,100°C.

19. Process according to Claim 18, characterized in that the active alumina powder used has been obtained by the rapid dehydration of aluminium hydroxides or oxyhydroxides in a stream of hot gases.

20. Process according to Claim 18, characterized in that the aqueous medium consists of water and/or of any acid and/or salt which dissociates in water, releasing an anion, to give a solution having a pH of less than 9.

21. Process according to Claim 1, characterized in that the shaping and the gelling of the drops of mixture are carried out by introducing the drops into a water-immiscible liquid in such a way that the drops form beads, and these beads are coagulated simultaneously and/or subsequently by means of a gelling agent which removes the stabilizing ligands.

22. Process according to Claim 21, characterized in that the water-immiscible liquid is chosen from amongst the group comprising: petroleum, kerosene, dodecylbenzene, trichloroethylene, organic solvents, hydrocarbons and mineral oils in general.

23. Process according to Claim 21, characterized in that the gelling agent is chosen from amongst the group comprising: ammonia gas, aqueous ammonia solution, ammonium carbonate, long-chain amines, hexamethylenetetramine and urea.

24. Process according to Claim 21, characterized in that drops of mixture are introduced into a column containing an upper phase consisting of petroleum and a lower aqueous phase consisting of ammonia solution, the shaping takes place in the upper phase and the gelling essentially in the lower phase, the temperature of the petroleum is close to ambient temperature, the pH of the aqueous ammonia solution is kept at a value greater than or equal to 9, and the residence time of the drops in the aqueous ammonia solution is a few minutes and less than 15 minutes.

25. Process according to Claim 1, characterized in that the shaping and the gelling of the drops of mixture are carried out by introducing the drops of mixture into an immiscible liquid capable of removing the water from the drops.

26. Process according to Claim 1, characterized in that the shaping and the gelling of the drops of mixture are carried out by mixing the drops of mixture with at least one water-soluble monomer of which the noncrosslinked polymer is soluble in water or forms a gel, and dispersing the drops of mixture thus formed in a hot fluid medium.

27. Process according to Claim 1, characterized in that the concentration of the boehmite sol or pseudoboehmite sol is between 10 and 15%.

28. Process according to Claim 1, characterized in that the proportion of the ultrafine boehmite sol relative to the spheroidal alumina particles is between 65 and 90% by weight.

29. Process according to Claim 1, characterized in that the spheroidal alumina particles have a diameter of between 5 and 10 micrometres.